# EUROPEAN PATENT APPLICATION

(11) **EP 2 177 279 A1**
(43) Date of publication of application: **21.04.2010**
(21) Application number: 08790135.1
(22) Date of filing: 02.07.2008
(51) Int. Cl.: B09B 3/00, B01J 35/02, C22B 1/00

(54) **METHOD OF RECOVERING VALUABLE MATERIALS FROM WASTE HOUSEHOLD ELECTRICAL APPLIANCE**

(30) Priority: 05.07.2007 JP 2007177050
(71) Applicant: Panasonic Corporation, Kadoma-shi Osaka 571-8501 (JP)
(72) Inventor: TSUTSUMI, Nobutaka, Hyogo 673-1447 (JP); SAKAI, Yasuhiko, Hyogo 673-1447 (JP); SATO, Yasuyuki, Hyogo 673-1447 (JP); UTUMI, Syougo, Hyogo 673-1447 (JP); YOKOYAMA, Hideki, Hyogo 673-1447 (JP)
(74) Representative: Ehlers, Jochen
(86) International application number: PCT/JP2008/001736
(87) International publication number: WO 2009/004801

(57) **Abstract**

The present invention provides a method for efficiently recovering a metal element as a valuable substance from a composite derived from a waste household electric appliance, wherein quality of the recovered inorganic substance is as close as possible to quality which the inorganic substance had when the inorganic substance was used in the electric appliance. The objective method for recovering an inorganic element from a composite comprising an organic element and an inorganic element derived from an electric appliance is provided by bringing the composite into contact with a titanium dioxide and removing at least one portion of the organic element by decomposition under an oxygen atmosphere.

## Description

### Technical Field

The present invention relates to a method in which a composite derived from an electric appliance, particularly a composite comprising an organic element composed of an organic substance and an inorganic element composed of an inorganic substance is brought into contact with catalyst particles capable of decomposing the organic element, thereby decomposing the organic element and recovering the inorganic element as a valuable substance.

"A composite derived from an electric appliance" means the concept including an electric appliance itself, an electric component constituting the electric appliance, and that having a small size obtained by dividing, for example, cutting, crushing or collapse of the electric appliance or the electric component. More specifically, it means various electric appliances (for example, a household electric appliance such as television), various electric components constituting the electric appliances, and those having a small size obtained by dividing the electric appliances or the electric components. For example, "a composite derived from an electric appliance" includes an electric component obtained when a waste household electric appliance is treated, and that having a small size obtained by crushing the electric component.

### Background Art

From the point of view of global environmental protection, recycling of materials used in electric appliances such as television has recently been advocated and various recycling methods have been studied. Electric appliances are composed of various electric components and, for example, these electric components may be often composed of metal elements (for example, copper elements in various forms) and elements of insulating materials (plastic elements in various forms) integrated with the metal elements. In another case, there are also electric appliances obtained by integrating inorganic materials elements such as ceramic and glass with plastic materials.

In these electric components, it is required from the point of view of the above recycling that another element is separated from one element and at least one element is recovered and reused as a valuable substance. Various methods are proposed for reusing. For example, a method for recycling and reusing a composite waste is proposed (see Patent Document shown hereinafter), wherein a crushed electric component is reused as a raw material and fuel for iron or non-ferrous metal. According to this method, a metal contained in the crushed electric component is incorporated into iron or non-ferrous metal to be produced, an adverse influence may be sometimes exerted on quality of the produced iron or non-ferrous metal.

Metal used for electric components is originally satisfactorily in quality (for example, purity) and it is preferred to recover the metal of which quality is as close as possible to quality which the metal had when the metal was used in the original electric component. However, considering the recycling method described above, it is impossible to expect such recovery method.

In the case of prioritizing the quality of recovered metal, a method is used, wherein an electric appliance is decomposed and an electric component is taken out and then, for example, a plastic insulating material existing as an organic element is removed from the electric component such as a winding wire of a motor using a man power so as to recover an inorganic element such as copper wire and to reuse the same as a valuable substance. This method is too labor-intensive and inefficient method.
Patent Document 1: JP 2003-311250 A

### Disclosure of the Invention

### Problems to be Solved by the Invention

Therefore, it is required to provide a method in which an inorganic element, particularly a metal element is efficiently recovered as a valuable substance from a composite derived from an electric appliance, particularly a waste household electric appliance, and the quality of the inorganic element recovered is as close as possible to quality which the inorganic element has when the inorganic element was used in the electric appliance.

### Means for Solving the Problems

According to the problems described above, the present inventors have intensively studied and found that it is useful to decompose and remove an organic element using titanium dioxide (TiO₂) known as a photocatalyst so as to recover an inorganic element from the above composite, and thus the present invention has been completed. It is per se known that the titanium dioxide is able to decompose and remove an organic substance as a gas. However, it is not known that the titanium dioxide is used so as to recover an inorganic element as a valuable substance from a composite containing an organic element and an inorganic element. According to the organic element to be decomposed, more specifically kind of an organic substance constituting the organic element, various gases are generated. Although gases such as carbon dioxide, carbon monoxide and water (or steam) are commonly produced by decomposition of the organic element using the titanium dioxide, other gases such as hydrogen chloride and chlorine etc are sometimes produced according to kind of the organic element.

Therefore, the present invention provides a method for recovering an inorganic element from a composite derived from an electric appliance comprising an organic element and an inorganic element, the method comprising bringing the composite into contact with a titanium dioxide catalyst and removing at least one portion of the organic element by decomposition under an oxygen atmosphere. It is preferred that the removable organic element is substantially a whole of the organic element. However, even when a portion, for example, half of the organic element may be removed, a composite containing a decreased amount of the organic element can be recovered. In that case, since the remained organic element is efficiently removed by another treatment of the recovered composite and thus an inorganic element can be finally recovered, the recovery method of the present invention has a meaning. For example, the remaining organic element can be removed by subjecting the recovered composite to an alkali treatment or an acid treatment. In another embodiment, the remaining organic element may be removed by combustion.

In the recovery method of the present invention, the organic element is an element composed of an organic substance, while the organic substance is a compound which commonly has carbon atoms in a basic framework of a structure, and is not particularly limited as long as it can be combined with an inorganic element to form a composite and also can be decomposed by contacting with a titanium dioxide catalyst. Specific examples of the organic substance include plastic resins (for example, polyolefins such as polyethylene and polypropylene, polyester, polystyrene, acrylonitrile-butadiene-styrene, acrylonitrile-styrene, polyimide, polyethylene terephthalate, polyacetal, and polycarbonate etc), lubricating oils, adhesives, and coating materials. The organic element can be composed of the organic substance alone or in combination. The organic element composed of the organic substance is integrally combined with an inorganic element described hereinafter by means of bonding, adhesion and/or engagement in various forms and states. Therefore, it is not easy to cleave a bond between an inorganic element and an organic element by a physical force and to recover the inorganic element in a composite.

In the recovery method of the present invention, an inorganic element is an element composed of an inorganic substance, and the inorganic substance is commonly a compound other than the organic substance and is not particularly limited as long as it can be combined with the above organic element to form a composite. Specific examples of the inorganic substance include metal (for example, iron, copper, aluminum, etc.), ceramic and glass. The inorganic element can be composed of the inorganic substance alone or in combination. The inorganic element composed of the inorganic substance is combined with the above organic element in various forms (for example, line, sheet, block, variant, etc.) and states.

In the recovery method of the present invention, a composite means that it is obtained by integrating the above organic element and inorganic element, and derived from the electric appliance as described above. Specific examples thereof include a motor, a compressor, a coil, a printed circuit board, a harness and codes, and those having a small size obtained by dividing (for example, crushing) them.

As a titanium dioxide catalyst used in the recovery method of the present invention, it is possible to use titanium dioxide known as a catalyst which promote the decomposition reaction capable of decomposing the organic element into various gasses under an oxygen atmosphere. Specifically, titanium dioxide known as a so-called photocatalyst can be used. The catalyst is preferably in a powder or granular form so as to ensure contact with the composite in various forms. The "under an oxygen atmosphere" means that the decomposition reaction is conducted under a condition where oxygen exists.

The composite may be brought into contact with the titanium dioxide catalyst by any proper method, and the contact ensures a condition in which at least one portion, preferably larger portion, and more preferably substantially entire portion of the organic element can be decomposed. For example, the contact may be carried out by charging the composite and the titanium dioxide catalyst in a tank, followed by stirring, and air (or oxygen) is efficiently fed to the organic element which is broght into contact with the titanium dioxide catalyst during stirring. For example, while feeding air (or oxygen) into a tank, the composite and the titanium dioxide catalyst are mixed together with air (or oxygen) by stirring under heating.

### Effects of the Invention

The recovery method according to the present invention can decompose an organic element by using titanium dioxide and therefore has an advantage that the organic element combined with an inorganic element can be removed by selective decomposition without exerting particularly large influence on the inorganic element.

### Brief Description of Drawings

Fig. 1 is a perspective view schematically showing an exploded state of a holding vessel for holding a composite which are preferably used in a recovery method according to the present invention.
Fig. 2 is a view schematically showing a screw feeder for carrying out a recovery method of the present invention. Explanation of Reference Numerals

- 10: Holding vessel
- 11:: Upper holding element
- 12:: Lower holding element
- 13:: Female screw portion
- 14:: Male screw portion
- 15:: Feeder tank
- 16:: Screw
- 17:: Motor for turning
- 18:: Charging apparatus
- 19:: Shutter
- 20:: Screw feeder
- 21:: Titanium dioxide catalyst
- 22:: Taking-out apparatus
- 23:: Opening and closing lid
- 24:: Return transporting apparatus
- 25:: Net (mesh)
- 26:: Exhaust apparatus
- 27:: Oxygen feeder
- 30:: Additional organic material

### Mode for Carrying Out the Invention

In the recovery method of the present invention, the decomposition reaction is preferably carried out at a temperature of a range from 400 to 550°C, more preferably from 450 to 550°C, most preferably from 475 to 525°C, and specifically from 480 to 500°C. When the temperature is lower than the above range, the decomposition reaction requires a longer time. In contrast, when the temperature is higher than the above range, since the condition of the decomposition reaction become more severe, an inorganic element recovered is likely to be oxidized and quality of the recoverable inorganic element tends to become more inferior.

Such the temperature range can be easily ensured by heating from the outside of the decomposition reaction system when the composite is brought into contact with the titanium dioxide. For example, heating can be conducted by providing a jacket in a reaction vessel (for example, a stirring tank) for carrying out the decomposition reaction, and then feeding a heat medium (for example, steam, etc.). Alternatively, heating can be conducted by disposing a coil inside a stirring tank and feeding a heat medium in the coil. Alternatively, the decomposition reaction system may be heated by disposing an electric heater in the decomposition reaction system.

The present inventors have intensively studied furthermore about the method for recovering an inorganic element from a composite according to the present invention and found that the decomposition of the organic substance by means of titanium dioxide is caused by an exothermic reaction, the proportion (for example, a weight proportion) of the organic element in the composite as a subject of the method according to the present invention is smaller than that of the inorganic element and is commonly considerably small, and thus it has been found that it is not easy to maintain the temperature of the above decomposition by heat only generated by the decomposition of the organic element.

In order to maintain the temperature, in the recovery method of the present invention, it is preferred that, when the composite is brought into contact with the titanium dioxide, an organic material is added from the outside of the decomposition reaction system and is also decomposed by the titanium dioxide, and also the temperature of the above decomposition reaction is maintained by using heat generated during the decomposition of the organic material. The additional organic material may be decomposed by the titanium dioxide catalyst under an oxygen atmosphere to generate heat during the decomposition, for example, the organic substance described above. Together with the organic element of the composite, at least one portion, preferably substantially whole of such additional organic material is decomposed, and the above temperature is maintained by using heat generated during the decomposition for the decomposition reaction. It is preferred that the material and/or amount of the additional organic material is/are appropriately selected according to the material and the amount (or proportion) of the organic element contained in the composite as well as the decomposition temperature. The additional organic material is preferably in a fine form, for example, forms such as powder, particle, granule and flake. These forms are effective so as to control the temperature of the decomposition reaction system more uniformly and/or more accurately.

Although the temperature at which the decomposition reaction is carried out can be ensured by heat generated by the decomposition of the additional organic material and the organic element of the composite as described above, it may be sometimes preferred to use the generated heat in combination with heating from the outside of the above decomposition reaction system in view of ease and/or accuracy of temperature control. Therefore, the recovery method of the present invention includes an embodiment in which the temperature of the decomposition reaction is maintained without using such combined heating, and an embodiment in which the temperature of the decomposition reaction is maintained by using such combined heating.

Particularly preferable additional organic material is derived from an electric appliance as descried above, and is substantially composed of an organic element only. Namely, the organic material is an organic substance derived from an electric appliance, and particularly a waste plastic material such as a resin used for an electric appliance. Such material is generated when an electric appliance is treated so as to recycle the same at the same time or different time of generation of the above composite. As a matter of course, the organic material may also be a waste plastic material generated from another step or process, and particularly a material which is treated by combustion. Since the additional organic material is used to obtain decomposition heat, the object can be sufficiently achieved even in the case of a waste plastic material. Thereby, both effective use of the waste plastic material as a heat source and energy saving of the decomposition process of the organic element of the composite can be carried out.

In a particularly preferred embodiment, when the recovery method according to the present invention is carried out, the composite is brought into contact with the titanium dioxide catalyst while the composite is placed in a holding vessel formed of a wall member having an opening, and preferably in a cage-like holding vessel. The cage-like holding vessel is a vessel in which a well constituting the holding vessel is substantially composed of only a framework made of a thin wire or rod and a planar portion does not exist (for example, a vessel like a bird cage or an insect cage), and therefore the opening is defined by the wire.

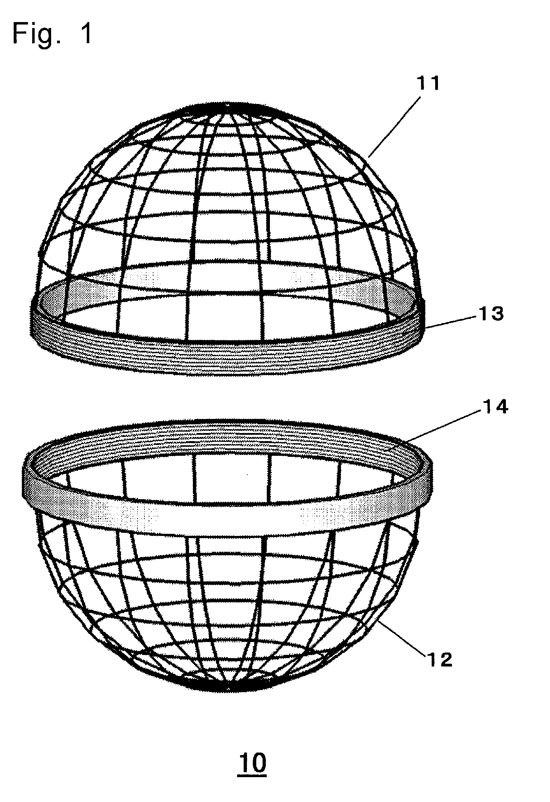

Since it is necessary that the holding vessel can hold the composite while the composite is placed therein, an ingenuity capable of placing the composite therein is required. For example, the holding vessel may be provided with an inlet through which the composite can pass, and which can be opened and closed. Also, it is also possible that the holding vessel having a predetermined form (for example, a spherical cage-like vessel) is composed of two half elements (hemispherical half elements, refer to "11" and "12" of Fig. 1 described hereinafter) which are mutually fitted, and the composite is placed in the hemispherical half element, and then the holding vessel having a predetermined form can be obtained by mutually fitting and engaging the two half elements (refer to screw portions "13" and "14" of Fig. 1 described hereinafter).

Such a spherical cage-like holding vessel is schematically shown in Fig. 1. A holding vessel 10 is composed of two components, an upper holding element 11 and a lower holding element 12 as half elements. The holding vessel 10 can be formed by combining and integrating the upper holding element 11 with the lower holding element 12. In order to integrate both elements, for example, a method of screwing or binding with a wire described hereinafter can be used. As long as both the elements can be integrated and a composite placed therein can be held, the method of integrating both elements is not limited. In the holding vessel 10, the outer diameter portion of the upper holding element 11 is provided with a female screw 13, whereas, the inner diameter portion of the lower holding element 12 is provided with a male screw 14. By screwing the upper holding element 11 into the lower holding element 12, both the elements are integrated and thus the holding vessel 10 can be assembled. When decomposition of the composite is conducted, the composite crushed optionally so as to place in the holding vessel 10 are placed in either the upper holding element 11 or in the lower holding element 12, and then both the upper holding element 11 and the lower holding element 12 are combined and screwed, and thus the composite is held in the holding vessel 10. With regard to the holding vessel 10, it is possible to place the composite into the holding vessel and to take out the composite from the holding element for a short time by using a screwing method as a method of joining the upper holding element 11 with the lower holding element 12, as described above, without using a special tool.

Although a titanium dioxide catalyst can freely enter and exit the holding vessel through an opening, it is preferred that the holding vessel is constituted so that a composite (in a state before starting the decomposition reaction), a composite containing a decreased amount of an inorganic element, and an inorganic element do not exit to the outside from the inside of the holding vessel through the opening. When an organic element is decomposed by bringing a composite into contact with a titanium dioxide catalyst while the composite is placed in the vessel, an inorganic element only is finally remained in the holding vessel in the most ideal state. When the holding vessel is taken out from the decomposition reaction system, the titanium dioxide catalyst falls out of the opening of the holding vessel and thus the inorganic element recovered is remained in the holding vessel. Namely, it is advantageous in the point that the recovered inorganic element can be separated from the titanium dioxide catalyst only by taking out the holding vessel.

Such the holding vessel can also be used in any embodiment of the recovery method of the present invention. For example, in a recovery method using a screw feeder described hereinafter, a holding vessel for containing a composite may be transported together with a titanium dioxide catalyst. In a recovery method using a stirring tank, a holding vessel for containing a composite may be stirred with a titanium dioxide catalyst. Particularly, when the holding vessel has a spherical cage-like shape as described above, since fluidity of the holding vessel itself in the titanium dioxide catalyst increases and the composite can be effectively brought into contact with the titanium dioxide catalyst, and therefore it is advantageous.

The recovery method of the present invention can be carried out using an apparatus capable of bringing the composite into contact with the titanium dioxide catalyst under an oxygen atmosphere. The apparatus is not particularly limited and the recovery method of the present invention can be carried out using a screw feeder, a stirring tank and so on.

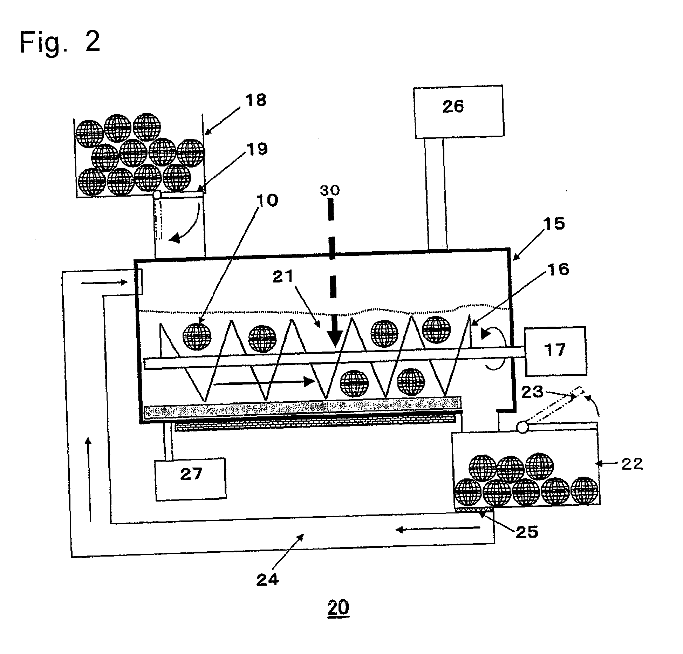

The screw feeder is an apparatus in which a particulate material fed into a casing through an inlet (feed port) provided at an upstream region of the casing is transported to an outlet (discharge port) provided at a downstream region of the casing by rotating a screw in the casing (or frame). Such a screw feeder is schematically shown in Fig. 2. Fig. 2 shows an embodiment in which a composite contained in the above spherical cage-like holding vessel 10 is treated in a screw feeder 20.
In a feeder tank 15 as the casing, a screw 16 for transporting a holding vessel 10 and a titanium dioxide catalyst (preferably in a granular form) 21 is provided. The screw 16 is rotated by a rotating motor 17 provided outside the feeder tank 15. In a charging apparatus 18 having a feed port provided at the upstream region of the feeder tank 15, the holding vessels 10 filled with a composite are housed. By opening and closing a shutter 19, the holding vessels 10 are charged in the feeder tank 15, where a treatment of the composite in the holding vessels 10 is initiated. While the charged holding vessels 10 and the titanium dioxide catalyst are transported from the left side to the right side in the drawing by rotation of the screw 16, the composite(s) housed in the holding vessels 10 is/are mixed with the titanium dioxide catalyst. During mixing, an organic element of the composite is decomposed. Thereafter, an inorganic element in which the organic element has been at least partially removed is taken out in a taking-out apparatus 22, together with the titanium dioxide catalyst, through a discharge port provided at the downstream portion of the feeder tank 15. The titanium dioxide catalyst thus taken out is separated from the holding vessel 10 using a mesh 25 provided in the taking out apparatus, recycled by a proper return transporting apparatus (for example, conveyor) 24 and then fed to the upstream portion of the feeder tank 15.

When an additional organic material is fed as described above, the feed position is a position which is downstream from the feed port of the screw feeder and upstream from the discharge port, for example, an intermediate position between the feed port and the discharge port as shown by a broken-line arrow 30 in Fig. 2. Basically, the additional organic material is fed so as to maintain the above temperature range where the decomposition reaction is carried out. Therefore, according to necessity of accuracy and tolerance etc. of the temperature to be retained, the additional organic material may be fed at plural positions in the transportation direction of the screw feeder. Also, the additional organic material may be fed at plural positions around the feeder tank even at the same position in the transportation direction.

Regarding requisite oxygen atmosphere, a vapor phase portion in the casing may be communicated with ambient atmosphere around the screw feeder. Alternatively, air or oxygen may be forcibly fed to the vapor phase portion in the casing. In another embodiment, the screw is made of a hollow shaft, an opening is provided around the shaft, and then air or oxygen is fed from the inside of the shaft to the outside through the opening, and thus oxygen atmosphere can be ensured. In still another embodiment, air or oxygen may be fed through an opening provided at the bottom of the casing. Also, these embodiments may be appropriately used in combination. In the embodiment shown in the drawing, requisite oxygen or air is fed to the feeder tank 15 from an oxygen gas (or air) feeding apparatus 27.

In order to discharge a gas generated by the decomposition of the organic element, a duct and an exhausting apparatus 26 are provided so as to extract the gas from the vapor phase portion of the screw feeder, and then the gas is removed from the screw feeder as an exhaust gas therethrough. The exhaust gas discharged through the duct can be optionally subjected to a detoxification treatment and then released to air. The detoxification treatment is carried out when the exhaust gas contains a toxic substance. For example, when the organic element containing chlorine is decomposed, there is a possibility that the exhaust gas contains a toxic substance such as hydrogen chloride or chlorine gas. Therefore, the detoxification treatment is carried out such as by washing the exhaust gas with an alkali, or passing the exhaust gas through water thereby adsorbing a chlorine gas.

The method according to the present invention can also be carried out by using a stirring tank as described above. In that case, a composite and titanium dioxide are fed in the tank and then mixed by a stirrer. Oxygen atmosphere may be ensured by any proper method, for example, by feeding air or oxygen into the tank. When an additional organic material is used, the additional organic material is fed to the stirring tank. Feeding may be carried out from the beginning of the recovery method, or may be carried out at an intermediate stage where the recovery process has proceeded to some extent, in other words, at a stage where it becomes difficult to maintain the temperature of the decomposition reaction by heat only generated by the decomposition of the remained organic element.

### Example 1

Using a screw feeder shown in Fig. 2, a degaussing coil (composed of about 80% by weight of a copper wire as an inorganic element and about 20% by weight of a polyvinyl chloride tape as an organic element wound around the copper wire) taken out from a television recovered as an exhaust household electric appliance was used as a composite and then treated with a titanium dioxide catalyst. The screw feeder used had a screw effective length of 4,000 mm, a screw diameter of 250 mm, and a screw pitch of 125 mm. This screw feeder was filled with 200 kg of titanium dioxide catalyst (commercially available granular photocatalyst having a diameter of about 2 mm).

The degaussing coil was rounded and put into a holding vessel (having a diameter of 90 mm) shown in Fig. 1 and the outside of a feeder tank was heated from a jacket provided around the feeder tank, first, so that decomposition reaction arises at a temperature inside the feeder tank of a range from 480 to 500°C. After reaching the decomposition reaction temperature, the screw was rotated and the holding vessel was sequentially charged in the feeder tank at a rate of 28 seconds per vessel. An average retention time of the holding vessel in the screw tank was about 220 seconds, during which the polyvinyl chloride tape as an organic element was decomposed. The copper wire was recovered by taking out from the holding vessel discharged from the screw feeder, and a new degaussing coil was put into the holding vessel and then charged in the screw feeder again.

Under this operation condition, the screw feeder was operated for about 8 hours and 782 holding vessels in total were charged in the screw feeder. The total amount of the composites placed into the screw feeder was 116 kg and the weight of the copper wire recovered was 90 kg (recovery rate: 780). During the operation, regarding an exhaust gas discharged from the screw feeder, fine particles therein was removed by a cyclone and hydrogen chloride therein was removed by passing through a neutralization tank filled with lime, thereby completing substantial detoxification thereof. After confirming safety, the waste gas was discharged into ambient atmospheric air.

In the above operation, after reaching the decomposition reaction temperature, the external heating amount was decreased, and then a polyethylene resin (in the form of pellets having the size equivalent to that of rice grain) was intermittently fed as an additional organic material at a downstream position spaced-apart about 100 mm from a feed port of the feeder tank so as to adjust the temperature in the feeder tank within a range from 480 to 500°C. The polyethylene resin was fed by a method of feeding for 15 seconds and no feeding for the following 15 seconds. As described above, while the 782 holding vessels in total were treated, 8.9 kg of the polyethylene resin was fed.

The copper wire as the recovered inorganic element had blackish brown appearance and was coated with copper oxide. Quality of this copper wire was evaluated by a specialist in recovery of non-ferrous metal. As a result, the quality of the resultant copper wire is corresponding to that of a copper of which price corresponds to 90% of a pure copper's price. This means that, even in the case of copper recovered from waste electric appliances, the quality of the copper is as close as possible to the original quality of the copper. Industrial Applicability

The present invention provides a method for recovering an inorganic element as a valuable substance from a composite of an organic element with an inorganic element generated during recycling a waste household electric appliance such that the inorganic element has as high quality as possible.

### Related Applications

This application claims priority under the Paris Convention or Article 41 of the Japanese Patent Law on Japanese Patent Application No. 2007-177050 filed on July 5, 2007 in Japan, the disclosure of which is incorporated by reference herein.

## Claims

1. A method for recovering an inorganic element from a composite derived from an electric appliance comprising an organic element and an inorganic element, wherein
the method comprises bringing the composite into contact with a titanium dioxide catalyst and removing at least one portion of the organic element by decomposition under an oxygen atmosphere.

2. The method according to claim 1, wherein the decomposition reaction is carried out at a temperature of a range from 400 to 550°C.

3. The method according to claim 1 or 2, wherein an additional organic material is added and at least one portion of the additional organic material is also decomposed, when the composite is brought into contact with the titanium dioxide.

4. The method according to claim 3, wherein an amount of the additional organic material is selected based on an amount of the organic element contained in the composite.

5. The method according to any one of claims 1-4, wherein the composite is brought into contact with the titanium dioxide while the composite and the titanium dioxide are fed into a screw feeder at the most upstream point and transported downstream together by rotating the screw.

6. The method according to claim 5, wherein an additional organic material is fed into the screw feeder at a downstream region from the feeding point for the composite and the titanium dioxide.

7. The method according to any one of claims 1-4, wherein the composite is contacted with the titanium dioxide by feeding the composite and the titanium dioxide to a stirrer tank and stirring them.

8. The method according to any one of claims 1-7, wherein the composite is put into a cage-like holding vessel and brought into contact with the titanium dioxide catalyst.
